# EUROPEAN PATENT SPECIFICATION

(11) **EP 0 725 564 B1**
(45) Date of publication and mention of the grant of the patent: **21.04.1999**
(21) Application number: 93902266.1
(22) Date of filing: 15.01.1993
(51) Int. Cl.: A21C 7/00

(54) **GROOVE ROUNDER**
RUNDWIRKMASCHINE
APPAREIL A CHENAL POUR FORMER DES BOULES

(30) Priority: 15.01.1992 FI 920181
(43) Date of publication of application: 14.08.1996
(73) Proprietor: LT-Kone Oy, 02630 Espoo (FI)
(72) Inventor: LAMMELA, Martti, SF-21380 Aura (FI)
(74) Representative: Eriksson, Svante Johan Christer
(86) International application number: FI9300011
(87) International publication number: WO9313667

(56) References cited:
- DE-A- 2 706 495
- DE-B- 1 073 981

## Description

The present invention relates to a groove rounder, which is especially intended for a rye dough. The device comprises a treatment table and a frame thereof as well as two treatment elements moving in contact with an upper surface of the treatment table and arranged parallelly in a longitudinal direction of the treatment table, for performing a groove-rounding operation. Each treatment element is by means of two transverse arms joined to its own pair of eccentrics rotating on vertical shafts, of which one pair of eccentrics is larger than the other pair of eccentrics, and which pairs of eccentrics are arranged to rotate at an equal and similarly oriented rotational speed thus providing for both treatment elements an operational movement, which follows a circular path and maintains the longitudinal position of the treatment elements.

Previously, it has not been mechanically possible to perform a correct groove-rounding operation of a rye dough, in which a lump of rye dough is treated for increasing its surface tension and for obtaining its final beautiful form. However, so-called conical groove rounders are in use, which may be applied to treating a wheat dough and corresponding glutinous doughs, but they are in no way suitable for treating a rye dough, which is wet and sticky by composition. So-called belt groove rounders are also in use, which are better suited to treating looser and less glutinous doughs, but they are not capable of satisfactorily performing the groove rounding of lumps of a rye dough either. In belt groove rounders, lumps of dough are led along a conical path formed by two endless belts rotating in opposite directions, but it is not capable of forming the lump of dough into the final round shape, but the lump of dough obtains a basically conical shape, which has to be subsequently manually formed into the final shape and thus requires an extra work phase. By using a harder dough, the belt groove rounder is capable of achieving lumps of dough slightly better by shape, but the bread volume then suffers.

The DE publication 27 06 495 describes a groove rounder developed for a wheat dough, in which the treatment elements are comprised of two plates moving at exactly the same rate and placed in a slanting position such that they diverge from each other at their upper ends. Such a design is in no way suitable for a sticky and wet rye dough, which is very difficult to treat, as is well known. In this previously known groove rounder a conveyor belt is not used, whereby the advancement of a lump of dough occurs in a direction defined by a treatment element driven by the larger pair of eccentrics.

The object of the present invention is the realization of a groove rounder intended for a rye dough and operating as properly as possible. This object has been achieved by means of a groove rounder, which is characterized in that the groove rounder contains an endless conveyor belt moving in a longitudinal direction of the treatment table, on top of which belt the treatment elements in the form of troughs, open against each other, move, whereby the pairs of eccentrics are arranged to rotate in such a direction that the treatment trough driven by the larger pair of eccentrics moves against the travelling direction of the conveyor belt when being in the vicinity of the central line of the conveyor belt, and that the movements of the treatment troughs are synchronized with each other such that both treatment troughs at least momentarily move together towards each other and correspondingly away from each other.

The further characteristics of the invention become apparent on the basis of the enclosed claims 2-8.

The invention is next described in more detail with reference to the accompanying drawing, in which
Fig. 1 is a perspective view of a groove rounder according to the invention;
Fig. 1a shows schematically a preferable cross-section of treatment elements and their mutual inclination; and
Fig. 2 is a functional scheme of four work phases of the groove rounder, seen from the top.

The groove rounder according to the invention comprises a treatment table 1 and a frame thereof, an endless conveyor belt 2 moving in the longitudinal direction of the treatment table as well as treatment elements 3 moving in contact with its upper surface and performing a groove-rounding operation, which elements 3 according to the invention comprise two treatment troughs 3 arranged in the longitudinal direction of the conveyor belt 2 parallelly and open against each other. Each treatment trough 3 is by means of two transverse arms 4 joined to its own pair of eccentrics 7; 8 rotating on vertical shafts 5; 6. One pair of eccentrics 7 is larger than the other pair of eccentrics 8, but all eccentrics 7; 8 are arranged to rotate at an equal and similarly oriented rotational speed. The eccentrics of the pair of eccentrics 7;8 rotate at the same rate thus providing for the treatment troughs 3 an operational movement, which follows a circular path and maintains the longitudinal position of the treatment troughs 3. The eccentrics 7; 8 are caused to rotate in the direction shown in the drawing by arrows such that the treatment trough 3 of the larger pair of eccentrics 7 moves against the travelling direction of the conveyor belt 2 driven by a separate driving device, when being in the vicinity of the central line of the conveyor belt 2. The movements of the treatment troughs 3 are synchronized with each other such that both treatment troughs 3 at least momentarily move together towards each other and correspondingly away from each other. By means of the rotational direction shown of the eccentrics 7, 8, a very efficient groove-rounding operation is obtained.

The pairs of eccentrics 7, 8 are driven by a common speed-regulated motor, preferably an electric motor, whose driving power is transmitted to the eccentrics 7, 8 e.g. by means of an endless cogged belt 13 or a chain travelling over chain wheels 9, 10 fixed to their vertical shafts 5, 6 and a chain wheel 12 fixed to the drive shaft of the motor 11.

The inner surfaces of the treatment troughs 3 are preferably coated with a felt-like material, which prevents the sticky rye dough from adhering to the treatment troughs 3 and simultaneously creates as good a groove-rounding operation as possible.

At the inlet end of the treatment table of the groove rounder is preferably located a batching device for dough lumps 14, which by extrusion batches dough pieces or lumps of a desired size onto the conveyor belt 2. In order to prevent the dough lumps 14 from adhering to the conveyor belt 2, also a flour spreading device is mounted at the inlet end of the groove rounder upstream of the batching device.

The groove-rounding operation may further be intensified by placing the plane of the treatment table 1 such that it slightly ascends in the travelling direction of the conveyor belt 2 such that the dough lumps 14 are caused to move uphill during the groove-rounding operation.

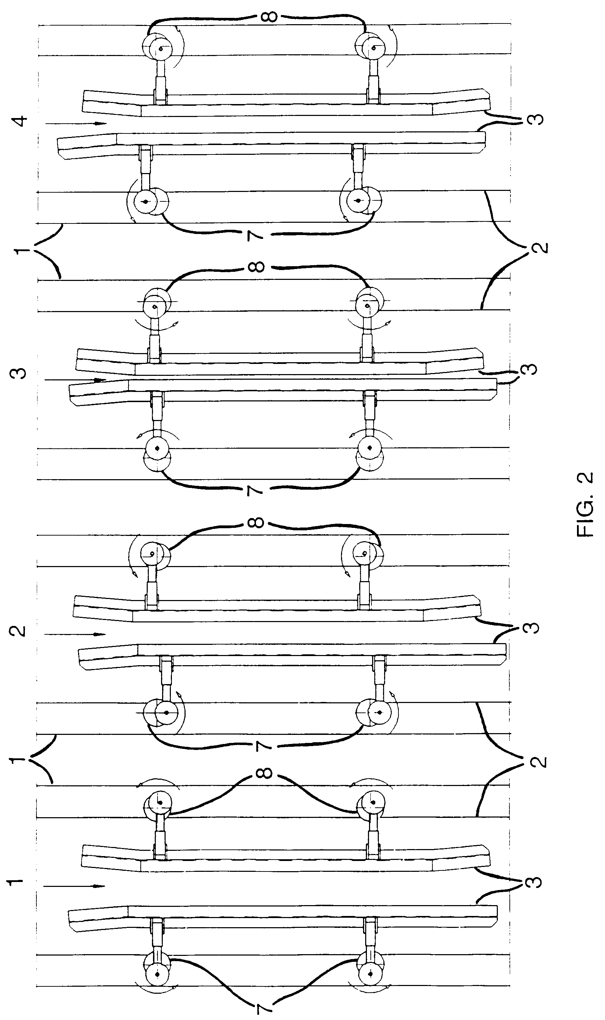

The groove rounder operates such that the dough lumps 14 individually batched onto the conveyor belt 2 move into a treatment station between the treatment troughs 3 moving together with the conveyor belt 2, at which station the groove-rounding operation occurs. The collision of the dough lumps 14 with the ends of the treatment troughs 3 may be efficiently prevented e.g. by bending the inlet ends of the treatment troughs slightly outwards towards the edges of the conveyor belt 2. When a dough lump arrives at the treatment station, the treatment troughs 3 affect the dough lump such that the treatment trough 3 of the larger pair of eccentrics 7 pushes the dough lump 14 diagonally towards the other treatment trough 3, simultaneously rotating the dough lump 14 in a direction slightly opposite to the rotational direction of the eccentrics 7, 8. The movement of the treatment trough 3 driven by the smaller pair of eccentrics 8 affects such that the dough lump is somewhat compressed so that as large a part of the dough lump as possible enters into contact with the inner surfaces of the treatment troughs 3 at the same time as it advances the rotation of the dough lump 14. In order to make the dough lump as round as possible and to have its surface completely treated, the speed of the conveyor belt 2 and the rotational speed of the eccentrics 7, 8 as well as the sizes of both pairs of eccentrics have to be proportioned relative to each other such that the rotational shaft of the dough lumps intersects during the groove-rounding operation the lower edge or lower portion of the treatment trough 3 driven by the larger pair of eccentrics 7, when the trough 3 is in the step 3 of Fig. 2, and the upper edge or upper portion of the second treatment trough 3, when this trough 3 is in its extreme position between the steps 3 and 4 of Fig. 2. It is then ensured that a bread blank 15 has been treated by all sides and obtained as round a shape as possible. Also the outlet end of the treatment trough 3 driven by the pair of eccentrics 8 is preferably slightly bent outwards towards the edges of the conveoyr belt 2. The movements of the conveyor belt 2 and the eccentrics 7, 8 have preferably to be proportioned such that the eccentrics rotate e.g. by 20 revolutions during the time when the dough lump transfers through the treatment station.

The pairs of eccentrics 7, 8 have to be preferably synchronized such that there is a small delay between both treatment troughs 3, as shown e.g. in the drawing, whereby the treatment trough 3 driven by the pair of eccentrics 8 reaches its extreme position by a delay of 25-30° relative to the treatment trough 3 driven by the pair of eccentrics 7.

In the realization of Fig. 2, the treatment troughs 3 of the groove rounder are shown in the step 1 in a position, wherein the treatment trough 3 driven by the larger pair of eccentrics 7 is located farthermost from the central line of the conveyor belt 2 and the treatment trough 3 driven by the smaller pair of eccentrics 8 is at a distance of ca. 30° from this extreme position. In the step 2, the treatment trough driven by the pair of eccentrics 7 has advanced halfway on it travel towards the central line of the conveyor belt 2, and the treatment trough 3 driven by the pair of eccentrics 8 is located at a distance of ca. 30° from its corresponding position. In the step 3, the treatment trough 3 driven by the pair of eccentrics 7 has on its part reached its position located closest to the central line of the conveyor belt 2, and the treatment trough 3 driven by the pair of eccentrics 8 is located at a distance of ca. 30° from its corresponding extreme position, and in the step 4, the treatment trough 3 driven by the pair of eccentrics 7 has been reversed halfway on its travel away from the central line of the conveyor belt 2, and the treatment trough 3 driven by the pair of eccentrics 3 is located at a distance of ca. 30° from its corresponding position. From the point of view of the groove-rounding operation, the transfer of the treatment troughs from the position shown in the step 1 to the position shown in the step 2 and further to the position shown in the step 3 and 4 is extremely preferable.

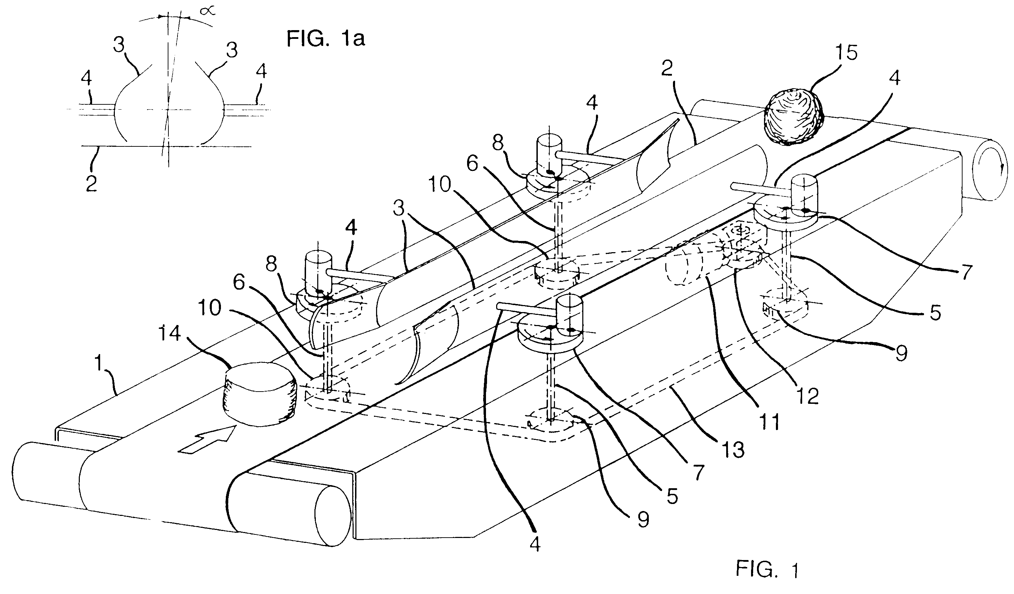

For making a fine adjustment of the groove-rounding operation possible, the treatment troughs 3 are in a vertical plane articulately fixed to the transverse arms 4. By means of this solution, the inclination angle of the treatment troughs 3 may be adjusted such that above-mentioned preferable inclination of the rotational shaft of the dough lumps 14 is reached, as shown in Fig. 1a. The angle α of the rotational shaft and the vertical plane is preferably in the region 5-15°.

In order to make the distance between the treatment troughs 3 optimal, when transferring to another dough-lump size, it is preferable that the length of the transverse arms 4 is adjustable. In order to make the groove rounder suitable for treating doughs of a plurality of types, it is also preferable that the sizes of the eccentrics 7, 8 are steplessly adjustable.

## Claims

1. A groove rounder especially for a rye dough, which device comprises a treatment table (1) and a frame thereof as well as two treatment elements (3) moving in contact with an upper surface of the treatment table and arranged parallelly in a longitudinal direction of the treatment table (1), for performing a groove-rounding operation, whereby each treatment element (3) is by means of two transverse arms (4) joined to its own pair of eccentrics (7; 8) rotating on vertical shafts (5; 6), of which one pair of eccentrics (7) is larger than the other pair of eccentrics (8), and which pairs of eccentrics (7, 8) are arranged to rotate at an equal and similarly oriented rotational speed, thus providing for both treatment elements (3) an operational movement, which follows a circular path and maintains the longitudinal position of the treatment elements (3), **characterized** in that the groove rounder contains an endless conveyor belt (2) moving in a longitudinal direction of the treatment table (1), on top of which belt the treatment elements (3) in the form of troughs, open against each other, move, whereby the pairs of eccentrics (7, 8) are arranged to rotate in such a direction that the treatment trough (3) driven by the larger pair of eccentrics (7) moves against the travelling direction of the conveyor belt (2) when being in the vicinity of the central line of the conveyor belt (2), and that the movements of the treatment troughs (3) are synchronized with each other such that both treatment troughs (3) at least momentarily move together towards each other and correspondingly away from each other.

2. A groove rounder according to Claim 1, **characterized** in that the pairs of eccentrics (7, 8) are driven by a speed-regulated motor (11), whose driving power is transmitted to the eccentrics (7, 8) by means of an endless cogged belt (13) or a chain travelling over chain wheels (9, 10) fixed to their vertical shafts (5, 6) and a chain wheel (12) fixed to the drive shaft of the motor (11).

3. A groove rounder according to Claim 1, **characterized** in that the pairs of eccentrics (7, 8) are synchronized such that the treatment trough (3) driven by the smaller pair of eccentrics (8) reaches its extreme position by a delay of about 25-30° relative to the treatment trough (3) driven by the larger pair of eccentrics (7).

4. A groove rounder according to Claim 1 or 3, **characterized** in that the plane of the treatment table (1) ascends in the travelling direction of the conveyor belt (2).

5. A groove rounder according to Claim 4, **characterized** in that the inner surfaces of the treatment troughs (3) are coated by a felt-like material.

6. A groove rounder according to Claim 5, **characterized** in that the inlet ends of the treatment troughs (3) and the outlet end of the treatment trough (3) driven by the smaller pair of eccentrics (8) are bent outwards.

7. A groove rounder according to any of the preceding Claims, **characterized** in that the treatment troughs (3) are on a vertical plane articulately fixed to the transverse arms (4) for adjusting the inclination angle of the treatment troughs (3).

8. A groove rounder according to Claim 7, **characterized** in that the inclination angle is adjusted such that the angle (α) between the vertical plane and the rotational shaft of the dough lump to be treated is in the region of 5-15°.

9. A groove rounder according to Claim 8, **characterized** in that at the inlet end of the treatment table (1) are located a batching device for dough lumps (14) as well as a flour spreading device.

10. A groove rounder according to any of the preceding Claims, **characterized** in that the length of the transverse arms (4) is adjustable.

## Patentansprüche

1. Kanal-Rundwirkmaschine, insbesondere für Roggenteig, mit einem Behandlungstisch (1) und einem Gestell dafür sowie zwei Behandlungselementen (3), die sich mit einer oberen Oberfläche des Behandlungstisches in Berührung stehend bewegen und parallel zueinander in Längsrichtung des Behandlungstisches (1) angeordnet sind, um eine Kanal-Rundformung zu bewirken, wobei jedes Behandlungselement (3) durch zwei Querarme (4) mit seinem eigenen Exzenterpaar (7; 8) verbunden ist, deren Exzenter auf vertikalen Wellen (5; 6) rotieren, wobei das eine Exzenterpaar (7) größer als das andere Exzenterpaar (8) ist und die Exzenterpaare (7, 8) mit gleicher Drehzahl und ähnlicher Drehrichtung drehbar sind, so daß sich bei beiden Behandlungselementen (3) eine Arbeitsbewegung ergibt, die auf einer Kreisbahn verläuft und die in Längsrichtung ausgerichtete Lage der Behandlungselemente (3) beibehält, dadurch gekennzeichnet, daß die Kanal-Rundwirkmaschine ein endloses Förderband (2) aufweist, auf dem sich die Behandlungselemente (3) in Form von mit ihren Öffnungen einander zugekehrten Trögen bewegen, wobei die Exzenterpaare (7, 8) in einer solchen Richtung drehbar sind, daß sich der durch das größere Exzenterpaar (7) angetriebene Behandlungstrog (3) gegen die Laufrichtung des Förderbands (2) bewegt, wenn er sich in der Nähe der Mittellinie des Förderbands (2) befindet, und daß die Bewegungen der Behandlungströge (3) so miteinander synchronisiert sind, daß sich die beiden Behandlungströge (3) zumindest kurzzeitig zusammen zueinander hin und entsprechend voneinander weg bewegen.

2. Kanal-Rundwirkmaschine nach Anspruch 1, dadurch gekennzeichnet, daß die Exzenterpaare (7, 8) durch einen drehzahlgeregelten Motor (11) angetrieben sind, dessen Antriebsleistung über einen endlosen Zahnriemen (13) oder eine Kette, die über auf vertikalen Wellen (5, 6) befestigte Kettenräder (9, 10) und ein auf der Antriebswelle des Motors (11) befestigtes Kettenrad (12) läuft, auf die Exzenter (7, 8) übertragen wird.

3. Kanal-Rundwirkmaschine nach Anspruch 1, dadurch gekennzeichnet, daß die Exzenterpaare (7, 8) so synchronisiert sind, daß der durch das kleinere Exzenterpaar (8) angetriebene Behandlungstrog (3) seine extreme Lage mit einer Verzögerung von etwa 25 bis 30° gegenüber dem durch das größere Exzenterpaar (7) angetriebenen Behandlungstrog (3) erreicht.

4. Kanal-Rundwirkmaschine nach Anspruch 1 oder 3, dadurch gekennzeichnet, daß die Ebene des Behandlungstisches (1) in Laufrichtung des Förderbands (2) ansteigt.

5. Kanal-Rundwirkmaschine nach Anspruch 4, dadurch gekennzeichnet, daß die inneren Oberflächen der Behandlungströge (3) mit einem filzartigen Material überzogen sind.

6. Kanal-Rundwirkmaschine nach Anspruch 5, dadurch gekennzeichnet, daß die Einlaßenden der Behandlungströge (3) und das Auslaßende des durch das kleinere Exzenterpaar (8) angetriebenen Behandlungstrogs (3) nach außen gebogen sind.

7. Kanal-Rundwirkmaschine nach einem der vorstehenden Ansprüche, dadurch gekennzeichnet, daß die Behandlungströge (3) in einer vertikalen Ebene gelenkig an den Querarmen (4) zur Einstellung des Neigungswinkels der Behandlungströge (3) befestigt sind.

8. Kanal-Rundwirkmaschine nach Anspruch 7, dadurch gekennzeichnet, daß der Neigungswinkel so eingestellt ist, daß der Winkel (α) zwischen der Vertikalebene und der Drehachse des zu behandelnden Teigklumpens im Bereich von 5 bis 15° liegt.

9. Kanal-Rundwirkmaschine nach Anspruch 8, dadurch gekennzeichnet, daß am Einlaßende des Behandlungstisches (1) eine Beschickungsvorrichtung für Teigklumpen (14) sowie eine Mehlsprühvorrichtung angeordnet sind.

10. Kanal-Rundwirkmaschine nach einem der vorstehenden Ansprüche, dadurch gekennzeichnet, daß die Länge der Querarme (4) einstellbar ist.

## Revendications

1. Appareil à chenal pour former des boulettes, en particulier en pâte de seigle, lequel appareil comprend une table de traitement (1) et un bâti pour la table, ainsi que deux éléments de traitement (3) se déplaçant en contact avec une surface supérieure de la table de traitement et agences en parallèle dans une direction longitudinale de la table de traitement (1) pour effectuer une opération de formation d'une boulette dans un chenal, dans lequel chaque élément de traitement (3) est relié au moyen de deux bras transversaux (4) à sa propre paire d'excentriques (7; 8) tournant sur des axes verticaux (5; 6), les excentriques (7) d'une paire sont plus grands que ceux (8) de l'autre paire, et les paires d'excentriques (7, 8) sont agencées pour tourner à une même vitesse de rotation et dans le même sens, en imprimant ainsi aux deux éléments de traitement (3) un déplacement fonctionnel qui suit un parcours circulaire et conserve la position longitudinale des éléments de traitement (3), caractérisé en ce que l'appareil à chenal pour former des boulettes contient une courroie transporteuse sans fin (2) se déplaçant dans une direction longitudinale de la table de traitement (1), au-dessus de laquelle courroie les éléments de traitement (3) en forme de gouttière s'ouvrent en opposition l'un à l'autre, se meuvent, les paires d'excentriques (7, 8) étant agencées pour tourner dans une direction telle que la gouttière de traitement (3) entraînée par la paire de plus grands excentriques (7) se déplace en opposition à la direction de défilement de la courroie transporteuse (2) lorsqu'elle se trouve au voisinage de la ligne centrale de la courroie transporteuse (2), et en ce que les déplacements des gouttières de traitement (3) sont synchronisés l'un par rapport à l'autre de telle sorte que les deux gouttières de traitement (3) se rapprochent l'une de l'autre et s'éloignent l'une de l'autre de manière correspondante, au moins momentanément.

2. Appareil à chenal pour former des boulettes selon la revendication 1, caractérisé en ce que les paires d'excentriques (7, 8) sont entraînées par un moteur (11) à vitesse régulée dont la force d'entraînement est transmise aux excentriques (7, 8) au moyen d'une courroie crantée sans fin (13) ou d'une chaîne passant sur des pignons à chaîne (9, 10) fixés à leurs arbres verticaux (5, 6) et d'un pignon à chaîne (12) fixé à l'arbre d'entraînement du moteur (11).

3. Appareil à chenal pour former des boulettes selon la revendication 1, caractérisé en ce que les paires d'excentriques (7, 8) sont synchronisées de telle sorte que la gouttière de traitement (3) entraînée par la paire de plus petits excentriques (8) atteint sa position extrême avec un retard d'environ 25-30° par rapport à la gouttière de traitement (3) entraînée par la paire de grands excentriques (7).

4. Appareil à chenal pour former des boulettes selon la revendication 1 ou 3, caractérisé en ce que le plan de la table de traitement (1) présente une pente ascendante dans le sens de déplacement de la courroie transporteuse (2).

5. Appareil à chenal pour former des boulettes selon la revendication 4, caractérisé en ce que les surfaces antérieures des gouttières de traitement (3) sont recouvertes d'un matériau semblable à du feutre.

6. Appareil à chenal pour former des boulettes selon la revendication 5, caractérisé en ce que l'extrémité d'entrée des gouttières de traitement (3) et l'extrémité de sortie de la gouttière de traitement (3) entraînée par la paire de plus petits excentriques (8) sont incurvées vers l'extérieur.

7. Appareil à chenal pour former des boulettes selon l'une quelconque des revendications précédentes, caractérisé en ce que les gouttières de traitement (3) sont situées dans un plan vertical fixé de manière articulée aux bras transversaux (4), pour ajuster l'angle d'inclinaison des gouttières de traitement (3).

8. Appareil à chenal pour former des boulettes selon la revendication 7, caractérisé en ce que l'angle d'inclinaison est ajusté de telle sorte que l'angle (α) entre le plan vertical et l'arbre de rotation de la motte de pâte à traiter est compris dans la plage de 5-15°.

9. Appareil à chenal pour former des boulettes selon la revendication 8, caractérisé en ce qu'à l'extrémité d'entrée de la table de traitement (1) sont disposés un dispositif de fourniture de mottes de pâte (14) ainsi qu'un dispositif pour répandre de la farine.

10. Appareil à chenal pour former des boulettes selon l'une quelconque des revendications précédentes, caractérisé en ce que la longueur des bras transversaux (4) est ajustable.
